# EUROPÄISCHE PATENTSCHRIFT

(11) **EP 3 627 661 B1**
(45) Veröffentlichungstag und Bekanntmachung des Hinweises auf die Patenterteilung: **02.06.2021**
(21) Anmeldenummer: 18196050.1
(22) Anmeldetag: 21.09.2018
(51) Int. Cl.: H02K 1/26, H02K 3/48, H02K 15/00, H02K 17/16

(54) **KÄFIGLÄUFER UND HERSTELLUNG EINES KÄFIGLÄUFERS**
CAGE ROTOR AND MANUFACTURE OF A CAGE ROTOR
INDUIT À CAGE D'ECUREUIL ET FABRICATION D'UN INDUIT À CAGE D'ECUREUIL

(43) Veröffentlichungstag der Anmeldung: 25.03.2020
(73) Patentinhaber: Siemens Aktiengesellschaft, 80333 München (DE)
(72) Erfinder: Trepper, André, 91052 Erlangen (DE); Brandl, Konrad, 93107 Thalmassing (DE); Pfaller, Maximilian, 90537 Feucht (DE)

(56) Entgegenhaltungen:
- EP-A1- 2 299 565
- EP-A1- 2 549 630
- EP-A1- 2 744 089
- EP-A1- 2 953 245
- WO-A2-2012/041943
- US-A- 6 092 277

## Beschreibung

Die Erfindung betrifft einen Käfigläufer, die Herstellung eines Käfigläufers als auch eine dynamoelektrische rotatorische Maschine mit einem derartigen Käfigläufer und die Verwendung derartiger Maschinen.

Dynamoelektrische rotatorische Maschinen mit einem Käfigläufer werden als Asynchronmaschinen bezeichnet, wobei der Käfigläufer aus in Nuten eines Blechpakets angeordneten Leitern besteht, die an den jeweiligen Stirnseiten des Blechpakets jeweils durch einen Kurzschlussring elektrisch kurzgeschlossen sind.

Bei Verwendung unterschiedlicher Leitermaterialien des Käfigläufers wird auch von Hybridläufern gesprochen, wie sie beispielsweise aus der EP 2 918 005 B1, aus der EP 2 282 396 A1, und der EP 2 891 234 B1 bekannt sind.

Die dabei beschriebenen Hybridläufer sind bezüglich ihrer elektrischen, thermischen und mechanischen Auslegung gegenüber Käfigläufern, die als reine Kupferläufer ausgeführt sind, u.a. aufgrund ihrer vergleichsweise geringeren Energieeffizienz lediglich eingeschränkt einsetzbar.

Die unter anderem in den aufgeführten Schriften bekannte Hybrid-Rotor-Gusstechnik wurde bislang bei den Leitern so ausgeführt, dass die Nut, insbesondere der Querschnitt der Nut des Käfigläufers im Blechpaket nur teilweise von einem Kupfereinlegestab eingenommen wurde. Der verbleibende Restquerschnitt wurde als Gießkanal zur Speisung zwischen den beiden Kurzschlussringen benötigt und mit Aluminium gefüllt.

Die elektrische Auslegung des Käfigläufers wird jedoch u.a. vom Füllgrad der Nut mit Kupfer bestimmt. Ein hoher Füllgrad ist elektrisch vorteilhaft, steht aber damit der bisher bekannten Fertigungstechnologie des Hybrid-Rotorguss entgegen. Diese erfordert einen hinreichend großen verbleibenden Querschnitt in der Nut, um das schmelzförmige Aluminium von einer Seite, der Angussseite des einen Kurzschlussringes, auf die andere Seite, die Entlüftungsseite des zweiten Kurzschlussringes zu bringen.

Für die elektrische Auslegung der dynamoelektrischen Maschine relevant sind weiter u.a. die zum Luftspalt der Maschine gewandte Streustege der Nut, die aber durch den bisherigen Fertigungsprozess bei Hybridläufern nicht realisierbar sind, da das Blechpaket der Läufernut in Umfangsrichtung betrachtet geschlossen sein muss, um den Austritt flüssigen Aluminiums während der Fertigung zu verhindern.

Nachteilig ist des Weiteren, dass eine Entwärmung eines Leiterstabes bzw. Kurzschlussstabes lediglich durch eine punktförmige Auflage des Stabes an den Wänden der Nut stattfindet. Bei Schrumpfung des Aluminiums im Bereich der Nut führt dies außerdem zur Spaltbildung, die u.a. keine zuverlässige Entwärmung des Leitermaterials aus der Nut in das Blechpaket zulässt.

Ebenso ist eine mechanische Fixierung des Stabes bzw. des Kupfereinlegers innerhalb der Nut und in der Mitte des Blechpakets aus dem oben ausgeführten Grund unbestimmt. An den Enden des Blechpakets des Kurzschlussläufers erfolgt lediglich eine Fixierung über die Kurzschlussringe. Bei vergleichsweise hohen Drehzahlen von über 10000 U/min und/oder Lastwechseln kann ein "schlackern" der Stäbe in der Nut nicht ausgeschlossen werden. Die Dokumente EP2299565, US6092277 und EP2744089 offenbaren Käfigläufer gemäß dem Stand der Technik.

Ausgehend davon liegt der Erfindung die Aufgabe zugrunde, einen Käfigläufer einer Asynchronmaschine zu schaffen, der die oben genannten Nachteile vermeidet. Ebenso liegt der Erfindung die Aufgabe zugrunde ein vergleichsweise wirtschaftliches Verfahren zur Herstellung eines Käfigläufers bereitzustellen. Des Weiteren soll das Anlaufverhalten dieses Läufers zuverlässig einstellbar sein.

Die Lösung der gestellten Aufgabe gelingt durch einen Käfigläufer einer dynamoelektrischen Maschine nach Anspruch 1.

Die Lösung der gestellten Aufgabe gelingt ebenso durch ein Verfahren zur Herstellung eines Käfigläufers einer dynamoelektrischen Maschine nach Anspruch 4.

Die Lösung der gestellten Aufgabe gelingt ebenso durch eine dynamoelektrische Maschine mit einem erfindungsgemäßen Käfigläufer hergestellt durch eines der erfindungsgemäßen Verfahren.

Durch den erfindungsgemäßen Aufbau des Käfigläufers wird nunmehr ein Leiter aus einem ersten elektrisch leitfähigen Material in einer vorgegebenen Form, insbesondere ein Leiterstab aus Kupfer in eine erste Ausnehmung des magnetisch leitfähigen Grundkörpers, also beispielsweise einem axial paketierten Blechpaket des Käfigläufers axial eingesetzt und/oder fixiert und/oder positioniert.

In den ersten Ausnehmungen des Käfigläufers ist nur ein Leitermaterial vorgesehen. Dies ist insbesondere ein vorgefertigter Leiterstab aus Kupfer. Materialverunreinigungen des Leitermaterials oder Oxidschichten sind dabei unter dem Leitermaterial zu subsumieren.

Die erste Ausnehmung ist als Nut mit einem zu einem Luftspalt der dynamoelektrischen Maschine weisenden Nutschlitz ausgeführt. Dieser Nutschlitz ist im Betrieb einer dynamoelektrischen Maschine u.a. für das Anlaufverhalten der Maschine und den Anlauf- bzw. Betriebsstrom ausschlaggebend, da durch den Nutschlitz u.a. die Streureaktanz des Läufers beeinflusst wird.

Um nun auch für große Maschinen (z.B. Achshöhe > 500, Hochspannung > 1000 V, Leistungsbereich > 500 Kilowatt) einen Hybridläufer bereitstellen zu können, ohne einen aufwändigen kompletten Kupferverguss des Käfigläufers durchführen zu müssen, werden an den Stirnseiten des magnetisch leitfähigen Grundkörpers erfindungsgemäß aus einem zweiten elektrisch leitfähiges Material Kurzschlussringe angegossen, die entweder beabstandet von den Stirnseiten ausgeführt sind oder direkt an den Stirnseiten anliegen.

Die Kurzschlussringe werden über dafür vorgesehene Werkzeuge und ggf. weitere spezielle zweite Ausnehmungen im magnetisch leitfähigen Grundkörper des Käfigläufers gebildet, insbesondere über Gießkanäle, die ein zweites elektrisch leitfähiges Material von einer Seite des leitfähigen Grundkörpers auf die andere Seite in flüssigem Zustand transportieren.

Im erstarrten Zustand dieses Füllmaterials, also dem zweiten elektrisch leitfähiges Material sind nunmehr an den axialen Stirnseiten des Käfigläufers Kurschlussringe ausgebildet. Gleichzeitig ist der Gießkanal bzw. Füllkanal, sofern vorhanden, mit dem Füllmaterial, also beispielsweise dem geschmolzenen Aluminium, das dann ausgehärtet ist, gefüllt.

Das erste Leitermaterial ist stangenförmig vorgefertigt. Pro erster Ausnehmung ist eine Stange vorgesehen. Es können sich aber auch in einer ersten Ausnehmung mehrere Stangen befinden die sich - im Querschnitt dieser ersten Ausnehmung betrachtet - zu diesem Querschnitt, sozusagen puzzleartig ergänzen.

Über die radiale Tiefe und/oder Breite und/oder Form des Nutschlitzes kann nunmehr die Streureaktanz des Käfigläufers im Betrieb der dynamoelektrischen Maschine eingestellt werden, so dass darüber u.a. beispielsweise das Anlaufverhalten eines Asynchronmotors mit einem derartigen Käfigläufer einstellbar ist. Die Nut ist somit ein Nutraum, der im Wesentlichen durch das erste Leitermaterial belegt ist und - soweit vorhanden - ein Nutschlitz. Der Nutraum ist dabei durch eine Nutwandung, einen Nutgrund und sofern vorhanden einen Nutschlitz begrenzt auf.

Das erste Leitermaterial befindet sich im Nutraum und zu einem geringen Anteil ggf. noch im Nutschlitz.

Durch den erfindungsgemäßen Herstellungsprozess mit speziellem Gießkanal, ist nunmehr die Nut mit einem Streusteg ausführbar und kann somit u.a. unabhängig von einer Gestaltung des Gießkanals ausgeführt werden. Es sind somit keine Einschränkungen bezüglich des Kupferfüllfaktors einer Nut vorhanden. Der Leiterstab bzw. die Leiterstäbe einer ersten Ausnehmung entsprechen in der Querschnittsfläche und Querschnittform im Wesentlichen dem Nutraum.

Über den Nutschlitz lässt sich nun, wie bei konventionellen Kupferläufern die Anforderungen hinsichtlich der Anlaufdaten, wie Drehmoment oder Anlaufstrom ausschließlich im Rahmen der geometrischen Fertigungsbedingungen realisieren und festlegen. Die Nutschlitze sind dabei im Querschnitt betrachtet u.a. parallelflankig oder V-förmig ausgeführt. Der Nutschlitz ist normalerweise parallelflankig und/oder in der radialen Mitte der Nut ausgebildet. Der Nutschlitz kann außerdem ebenso oder stattdessen, radial betrachtet, schräg verlaufen und/oder außermittig bzgl. der radialen Mitte der Nut angeordnet sein.

Durch ein Verstemmen des vorgefertigten Stabes, bzw. Leiterstabes bzw. Leiters in der Nut wird nunmehr eine plastische Verformung dieses Stabes in dem Nutraum herbeigeführt, was zu einem Formschluss dieses Stabes an die Wand des Nutraumes, also der Innenseite führt. Aufgrund der größeren Anlageflächen von Nutwandung und Leiterstab und der damit gegenüber einem punktuellen Kontakt gleichmäßigeren und besseren Entwärmung, wird auch ein besseres Betriebsverhalten der dynamoelektrischen Maschine erreicht.

Beim Verstemmen wird dabei ein Formschluss zwischen Leiterstab und Nutwandung herbeigeführt, der beispielsweise durch Eintreiben eines Meißels in den in dem Nutraum positionierten Leiterstab mittels eines oder mehrerer Schlitze generiert wird. Der Meißel wird dabei über den Nutschlitz auf dem Leiterstab angesetzt.

Darüber hinaus ist auch die mechanische Fixierung axial entlang des Blechpakets gegeben, was insbesondere bei höheren mechanischen Anforderungen an Drehzahl und Temperaturlastwechsel der dynamoelektrischen Maschine besonders vorteilhaft ist. Bei vergleichsweise hohen Drehzahlen von über 10000 U/min und/oder Lastwechseln wird somit ein "schlackern" der Leiterstäbe in der Nut vermieden.

Als Ergänzung zum Verstemmen des Leiterstabs in der ersten Ausnehmung eignet sich für Nuten mit Nutschlitz auch eine Aufheizung des magnetisch leitfähigen Grundkörpers, also des Blechpakets. Dies führt zu einer Aufweitung der ersten Ausnehmungen, also der Nuten, was das axiale Einsetzen der Leiterstäbe in diese Nut erleichtert. Durch die anschließende Abkühlung und den dadurch herbeigeführten Schrumpfprozess werden die Leiterstäbe in den ersten Ausnehmungen fixiert, was ebenfalls zu einem Formschluss zwischen Nutwandung und jeweiligen Leiterstäben führt.

Im weiteren Herstellungsprozess kann diese Aufheizung des magnetisch leitfähigen Grundkörpers, also des Blechpakets für den Gießprozess vorteilhaft sein, da sich durch die Aufheizung, das durch den Gießkanal zu führende zweite elektrisch leitfähige Material, weniger schnell abkühlt.

Die weiteren Ausnehmungen im Käfigläufer, die im wesentlichen achsparallel verlaufen, wie die zweiten, dritten und vierten Ausnehmungen sind in Umfangsrichtung betrachtet geschlossen ausgeführt. Die vierte Ausnehmung ist dabei eine Wellenbohrung, in die nach Fertigstellen des Käfigläufers eine Welle drehfest positioniert werden kann.

Die dritten Ausnehmungen, die um die Achse nahezu beliebig verteilt werden können, bilden axial verlaufende Kühlkanäle, die optional an einen Kühlkreislauf der dynamoelektrischen Maschine anschließbar sind. Die zweiten Ausnehmungen sind insbesondere Gießkanäle, über die das Füllmaterial, das zweite elektrisch leitfähige Material von einem axialen Ende zum anderen axialen Ende des Käfigläufers im Herstellungsprozess gelangt. Dies ist vor allem flüssiges Aluminium.

Die elektrische Leitfähigkeit des ersten Leitermaterials und des zweiten elektrisch leitfähigen Materials sind unterschiedlich. Ebenso sind deren Schmelztemperaturen unterschiedlich, so dass das Material mit niedrigerem Schmelzpunkt gegossen wird. Vorteilhafterweise ist dabei das erste Leitermaterial aus Kupfer, vorzugsweise vorgefertigte Kupferstäbe und das zweite elektrisch leitfähige Material ist Aluminium.

Der erfindungsgemäße Käfigläufer benötigt für seine Fertigung erste Ausnehmungen und eine vierte Ausnehmung, die zweiten und dritten Ausnehmungen werden u.a. nach Herstellungsart, Einsatzort und/oder Betriebszyklen der dynamoelektrischen Maschine sowohl in ihrer Form, in ihrer Anzahl, als auch in ihrer radialen Anordnung innerhalb des Käfigläufers festgelegt.

Der Herstellungsprozess eines derartigen Käfigläufers kann von einer Seite, also von einem axialen Ende des Käfigläufers zum anderen erfolgen, in dem das zweite elektrisch leitfähige Material, also z.B. flüssiges Aluminium in einen Füllraum eines ersten Werkzeugs eintritt und von dort über die Gießkanäle sich axial an das andere axiale Ende des Käfigläufers ergießt und dort den zweiten Kurzschlussring bildet.

Eine andere nicht erfindungsgemäße Möglichkeit einen derartigen Käfigläufer zu gestalten, besteht darin, nachdem die Leiterstäbe in die Nut eingelegt und/oder fixiert worden sind, nur an den axialen Enden des Käfigläufers die Kurzschlussringe gleichzeitig oder nacheinander anzugießen.

Die Kurzschlussringe werden dabei also separat mittels geeigneten Werkzeugen bzw. Vorrichtungen gleichzeitig oder hintereinander gegossen, ohne dass Gießkanäle im magnetisch leitfähigen Grundkörper notwendig sind.

Die Werkzeuge bzw. Gießvorrichtungen werden dabei beispielsweise mit flüssigem Aluminium gefüllt, wobei eine elektrische Kontaktierung der unterschiedlichen Materialien von Kurzschlussring und den Leiterstäben, insbesondere den aus dem magnetisch leitfähigen Grundkörper ragenden vorgegebenen Abschnitten herbeigeführt wird.

Schrägung der Achse oder leichte Pendelungen um die Achse des magnetisch leitfähigen Grundkörpers, beispielsweise Blechpaket unterstützt während des Gießprozesses eine Endgasung, sodass eine Lunckerbildung unterdrückt wird.

Des Weiteren kann die elektrische und/oder mechanische Verbindung zwischen den Leiterstäben und den Kurzschlussringen dadurch verbessert werden kann, dass die unterschiedlichen Materialien von Leiterstab und Kurzschlussring, insbesondere an deren vorgebbaren Kontaktstellen eine mischkristalline Verbindung eingehen.

Die Leiterstäbe ragen an beiden stirnseitigen Enden des Blechpakets des Läufers axial aus diesem heraus und in die angegossenen Kurzschlussringe. Die Erhöhung der Bindungskräfte an den Kontaktstellen, also zwischen den Leiterenden und Kurzschlussringen wird beispielsweise dadurch erreicht, dass die Leiter derartig beschichtet werden, dass sowohl zwischen der Beschichtung und den Leitern eine Legierung - also eine mischkristalline Verbindung - entsteht, als auch zwischen der Beschichtung und den gegossenen Kurzschlussringe.

Bei einer Erwärmung des Käfigläufers im Betrieb der dynamoelektrischen Maschine werden Temperaturen von ca. 150°C erreicht. Hierdurch kann der Übergang zwischen den Leiterstäben und den Kurzschlussringen hochohmiger werden, wodurch es zu einer Verschlechterung des elektrischen Leitwertes im Bereich des Übergangs zwischen den Kurzschlussringen und den Leiterstäben kommt. Das im Druckgussverfahren aus Abdichtungsgründen u.a. axial zusammengepresste Läuferblechpaket kann sich axial wieder aufweiten, wenn die Verbindung zwischen den Leiterstäben und den gegossenen Kurzschlussringen keine ausreichende axiale Haltekraft aufbringen kann.

Durch die Beschichtung werden die Leiterstäbe durch maximal mögliche Bindungskräfte an den Druckguss im Kurzschlussring gebunden. Entsprechend bleibt die Verbindung zwischen den Leiterstäben und den Kurzschlussringen trotz unterschiedlicher thermischer Ausdehnungskoeffizienten der unterschiedlichen Materialien in axialer und radialer Richtung auch dann stabil, wenn der Käfigläufer im Betrieb der dynamoelektrischen Maschine ausgeprägte thermische Zyklen durchfährt.

Im Betrieb der dynamoelektrischen Maschine verursachen bei hohen Drehzahlen auch die auf den Läufer wirkenden Fliehkräfte teils heftige mechanische Spannungen in dem Leiter-Kurschlussring.

Weiterhin kann durch diese Legierung ein optimaler elektrischer Übergangsleitwert zwischen den Materialien von Kurzschlussring und Leiterstab geschaffen werden.

Die erste Legierungsschicht wird beispielsweise durch elektromechanisches Galvanisieren erzeugt. Hierbei wird zunächst auf elektrochemischem Wege eine Schicht des Beschichtungsmaterials, insbesondere auf vorgegebenen Abschnitten der Leiter, insbesondere den Leiterstäben abgeschieden. Zwischen dem Leiter und dem Beschichtungsmaterial entsteht bei diesem Prozess die gewünschte mischkristalline Verbindung. Durch den Druckgussprozess schmilzt diese Beschichtung auf den Leitern auf und geht mit der Druckschmelze ebenfalls eine mischkristalline Verbindung ein, so dass eine zweite Legierungsschicht entsteht.

Anstelle des Galvanisierens sind andere Beschichtungsverfahren denkbar, die ebenso zu den gewünschten mischkristallinen Verbindungen zwischen den unterschiedlichen Materialien führen.

So ist eine Ausführungsform vorteilhaft, bei der die Beschichtung und die erste Legierungsschicht durch ein thermisches Spritzverfahren, insbesondere Flammspritzen, Plasmaspritzen, Lichtbogenspritzen oder Laserspritzen, erzeugt werden.

Bei einer Alternative hierzu werden die Beschichtung und die erste Legierungsschicht durch Kaltgasspritzverfahren erzeugt.

Bei einer weiteren Alternative wird die Beschichtung und die erste Legierungsschicht durch Aufdampfen erzeugt werden.

Bei den erfindungsgemäßen Herstellverfahren, insbesondere aber auch beim Galvanisieren wird vorteilhafterweise vor dem Beschichten eine Oxidschicht von den Leitern durch chemische Vorbehandlung der Leiter entfernt. Eine Oxidschicht hat isolierende elektrische Eigenschaften, so dass durch das Entfernen besagter Oxidschicht der Übergangswiderstand zwischen dem ersten und dem zweiten Material deutlich reduziert wird. Insbesondere im Bereich der Enden der Leiterstäbe, insbesondere Kupferstäbe, die aus dem Läuferblechpaket heraus und in die Kurzschlussringe ragen, entsteht eine äußerst stabile Verbindung zwischen den beiden Materialien, so dass die Festigkeit bezüglich thermischer Zyklen und im Betrieb auftretenden Fliehkräften erhöht wird, ohne die elektrische Leitfähigkeit insbesondere an den Übergangsstellen also den Kontaktstellen zu reduzieren. Hierbei entsteht somit eine nahezu ideale elektrische und mechanische Verbindung zwischen den Kurzschlussringen aus dem zweiten elektrische leitfähigen Material beispielsweise Aluminium und den Leitern, beispielsweise Kupferstäben.

Die besagten Endbereiche der Leiterstäbe stellen die kritische Verbindungsstelle zwischen den Leitern und den Kurzschlussringen dar. Entsprechend ist hier die starke kristalline Verbindung besonders wichtig. Auch ist vor allem in diesem Endbereich jedes Leiters dem elektrischen Übergangsleitwert zwischen den beiden Materialien eine besondere Bedeutung zuzumessen, da hier der Stromfluss von den Leitern auf die Kurzschlussringe übergeht.

Die Verbindung zwischen den Leitern und den Kurzschlussringen kann in weiterer vorteilhafter Ausgestaltung der Erfindung dadurch alternativ oder ergänzend verstärkt werden, indem die Leiter an beiden Enden jeweils einen aus dem Läuferblechpaket heraus und in die Kurzschlussringe hereinragenden Endbereich mit Formschlussmitteln zur Erzeugung eines Formschlusses zwischen den Leitern und den gegossenen Kurzschlussringen aufweisen.

Durch diese Formschlussmittel in den Endbereichen der Leiter wird die Verbindung zwischen den Leiterstäben und den Kurzschlussringen weiter gestärkt. Die an den Enden herausragenden Leiter sind durch die Formschlussmittel mit den Kurzschlussringen axial verspannt. Damit werden die Leiter je nach Temperatur und je nach Wärmeausdehnungskoeffizienten der Leiter und der Kurzschlussringe auf Zug oder Druck beansprucht. Der Kurzschlussläufer ist hierbei so auszulegen, dass die Beanspruchung stets im elastischen Bereich bleibt.

Durch die verwendeten Formschlussmittel wird ein Verschieben der Leiter innerhalb der Kurzschlussringe oder ein Herausziehen der Leiterstäbe aus den Kurzschlussringen verhindert, wodurch ein Abriss an der Fügestelle bzw. an den Kontaktflächen zwischen den beiden Materialien vermieden werden kann.

Als Formschlussmittel sind beispielsweise Durchgangslöcher in den Endbereichen der Leiterstäbe vorstellbar, die von der Schmelze während des Gussprozesses ausgefüllt werden.

Anstelle eines Durchgangslochs sind als Formschlussmittel auch Aussparungen in den Endbereichen, Verjüngungen der Leiterstäbe innerhalb der Endbereiche, Kerben, Einschnitte, Rändelungen der Endbereiche, Verwindungen der Leiter in den Endbereichen, eine Aufspaltung der Leiter in den Endbereichen vorstellbar oder allgemein, die Kontaktflächen zwischen Leiterstab und Kurzschlussring vergrößernde Strukturen geeignet.

Um die axiale Montage der Leiterstäbe in die Nut, insbesondere den Nutraum zu erleichtern, weist zumindest ein Endbereich eines Leiterstabes keine größeren Querschnittsflächen und -form als der Leiterstab selbst auf.

Um die Fliehkraftbeanspruchungen zu reduzieren können die Kurzschussringe an ihrem radial äußeren Rand Mittel zur Fliehkraftaufnahme vorsehen, wie z.B. eine Manschette oder einen Ring aus hochfestem Material.

In dem für den Kurzschlussring vorgesehenen Raum, der durch die Werkzeuge vorgegebene ist, können elektrisch leitfähige Einlegeteile positioniert werden, die dann mit eingegossen werden. Dies reduziert den Gießaufwand und/oder die Gießkanäle können dementsprechend geringer dimensioniert werden. Diese Einlegeteile können, wie oben beschrieben, beschichtet sein und/oder sind aus dem ersten Leitermaterial oder dem zweiten elektrisch leitfähigen Material oder einem weiteren elektrisch leitfähigen Material.

Die Erfindung sowie weitere vorteilhafte Ausgestaltungen der Erfindung werden anhand beispielhaft dargestellter Ausführungsbeispiele näher erläutert. Darin zeigen:
- FIG 1 und 2: Blechschnitte eines Käfigläufers,
- FIG 3: Blechschnitt eines nicht erfindungsgemäßen Käfigläufers
- FIG 4 und 5: Teillängsschnitte eines Käfigläufers,
- FIG 6: einen Teilquerschnitt einer elektrischen Maschine,
- FIG 7: eine prinzipielle Darstellung der Herstellung eines Käfigläufers,
- FIG 8: Teillängsschnitt eines Käfigläufers mit beabstandetem Kurzschlussring,
- FIG 9 bis 12: Gestaltungen von Endabschnitten der Leiterstäbe.

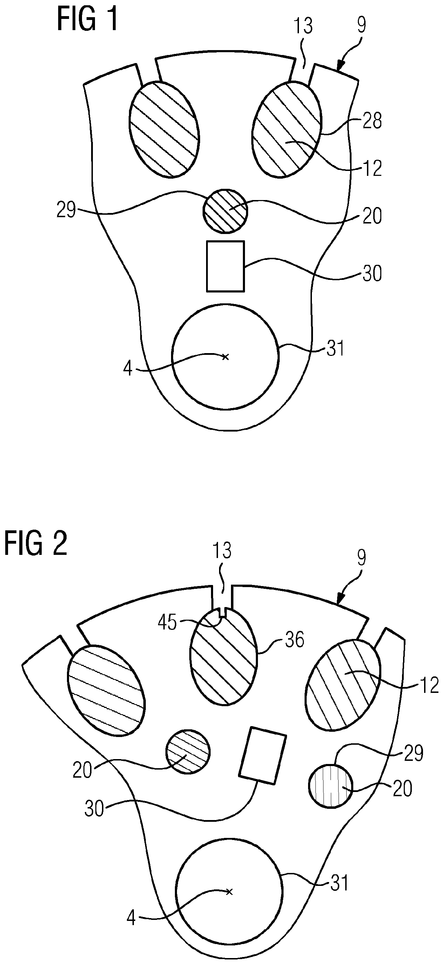

FIG 1 zeigt eine Schicht eines magnetisch leitfähigen Grundkörpers, insbesondere eines Blechpakets 32 eines Käfigläufers 9, der die ersten bis vierten Ausnehmungen 28 bis 31 näher zeigt. Dabei ist in der ersten Ausnehmung 28, die als Nut 33 des Käfigläufers 9 ausgeführt ist, ein Leiterstab 12 aus Kupfer vorgesehen, der vorgefertigt, axial in die erste Ausnehmung 28 eingesetzt bzw. eingelegt ist. Er wird deshalb auch als Einlegestab bezeichnet. Radial nach außen von dieser Nut bzw. ersten Ausnehmung 28 erstreckt sich ein Nutschlitz 13 zu einem in dieser Darstellung nicht näher dargestellten Luftspalt 14 einer dynamoelektrischen Maschine 1.

Über Breite und/oder radiale Länge des Nutschlitzes 13 lassen sich Anlaufverhalten und Drehmoment des Käfigläufers 9 und damit der dynamoelektrischen Maschine 1 einstellen. Des Weiteren gibt es zweite Ausnehmungen 29 über die der Kurzschlussring 10 auf einer axialen Stirnseite 46 des Käfigläufers 9 beispielsweise durch flüssiges Aluminium gegossen werden kann. Diese zweite Ausnehmung ist dann als Gießkanal 11 ausgeführt.

Daran anschließend, radial nach innen erstreckt sich eine dritte Ausnehmung 30, die im Betrieb des Käfigläufers 9 in der dynamoelektrischen Maschine 1 als axialer Kühlkanal 16 für eine nicht näher dargestellte Luft- oder Flüssigkeitskühlung des Käfigläufers 9 und/oder der dynamoelektrischen Maschine 1 fungiert.

Eine vierte Ausnehmung 31 ist in diesem Fall als Wellenbohrung 15 ausgeführt, in die später eine Welle 3 eingesetzt ist, die drehfest mit den Blechen bzw. dem magnetisch leitfähigen Grundkörper des Käfigläufers 9 verbunden wird.

Über die Festlegung der Durchmesser der zweiten und dritten Ausnehmungen 29, 30 lassen sich grundsätzlich die notwendigen Durchflussmengen der Druckgießprozesse bei der Herstellung und/oder der Kühlmedien im Betrieb der Maschine 1 vorgeben.

FIG 2 zeigt eine ähnliche Ausführung wie FIG 1, jedoch ist die dabei dargestellte Anordnung der zweiten und dritten Ausnehmung 29, 30, d.h. Gießkanal 11 und Kühlkanal 16 bezüglich Querschnittsform und/oder Anordnung radial und in Umfangsrichtung, beliebig nahezu beliebig gestaltbar. Dies können eckige Formen wie Dreieck, Rechtecke oder andere Vielecke sein, ebenso wie rundliche Formen wie Kreise oder Ellipsen.

Mit anderen Worten, die Anordnung der zweiten und dritten Ausnehmung 29 und 30 pro Blech kann mit einem Stanzwerkzeug beliebig vorgesehen werden. Letztendlich orientiert sich deren Ausführung an den Herstellungsparametern und dem angestrebten Betriebsverhalten der Maschine 1. Ebenso ist auf die Wuchtung des Käfigläufers 9 zu achten, die aber auch durch Materialanhäufungen (z.B. während des Gießprozesses) bzw. Materialentnahmen (nachträgliches Bearbeiten) am Kurzschlussring 10 justiert werden kann.

Durch axiale Anordnung derartiger Bleche, also in einem Blechpaket 32 muss sich in axialer Richtung zumindest ein im wesentlicher axialer Verlauf der Nuten und ein axialer Verlauf der Wellenbohrung 15 einstellen. Je nach Ausführung und Herstellungsart des Käfigläufers 9 können sich zusätzlich Gießkanäle 11 und/oder Kühlkanäle 16 ergeben bzw. vorgesehen werden.

Die ersten Ausnehmungen 28 können über den axialen Verlauf betrachtet auch mit einer Schrägung von einer halben bis ca. drei Nutteilungen versehen sein, um u.a. Rippelmomente zu vermeiden. Zusätzlich kann auch die zweite 29 und/oder dritte Ausnehmung 30 mit einer Schrägung versehen sein. Dies erhöht jedoch den Strömungswiderstand sowohl beim Gießprozess als auch bei einer Kühlung, so dass die zweiten 29 und dritten Ausnehmungen 30 eher parallel zur Achse 4 verlaufen werden, bei einer optional wählbaren Schrägung der ersten Ausnehmungen 28.

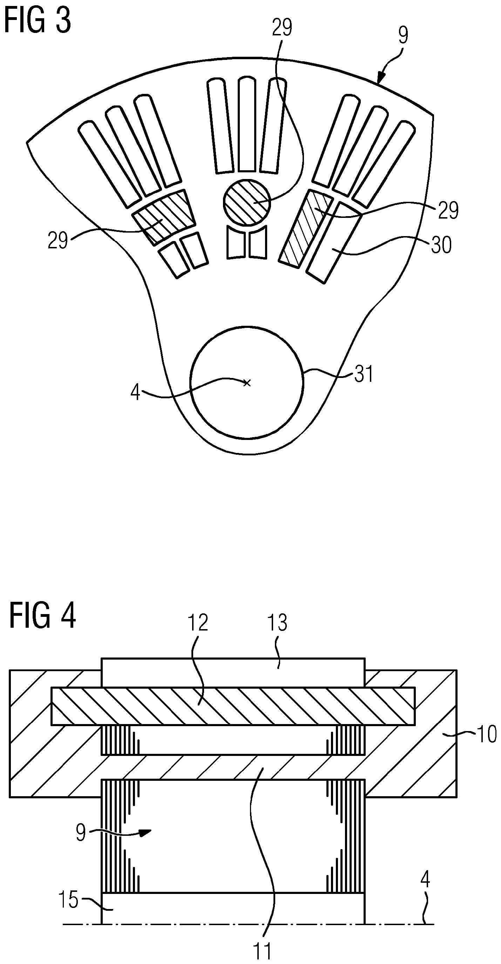

Eine weitere nicht erfindungsgemäße Darstellung der Anordnung von zweiter und dritter Ausnehmung 29, 30 ist FIG 3 zu entnehmen.

Die grundsätzliche Anordnung und Positionierung der zweiten und dritten Ausnehmungen 29, 30 in einem Blech werden u.a. durch mechanische und/oder thermische Vorgaben an den Käfigläufer 9 festgelegt.

Sie können dabei im Wesentlichen auf einem Radius liegen beispielsweise alternierend angeordnet sein oder auch radial übereinander angeordnet sein.

FIG 4 zeigt in einem prinzipiellen Längsschnitt eine Darstellung eines Käfigläufers 9, dessen magnetischer Grundkörper geblecht ausgeführt ist. An den axialen Stirnseiten 46 des Blechpakets 32 des Käfigläufers 9 sind Kurzschlussringe 10 direkt an die Stirnseiten 46 anliegend angeordnet. D.h., es sind zwischen der Innenseite des Kurzschlussrings 10 und den axialen Stirnseiten 46 des Blechpakets 32 des Käfigläufers 9 keine Abstände 37.

In den Nuten, die im Wesentlichen axial verlaufen, befindet sich in dieser Darstellung ein Kupferstab 12, der axial über die Enden des Käfigläufers 9 ragt. Diese axialen Überstände des Kupferstabs 12 sind mit Aluminium im Bereich des Kurzschlussrings 10 umgossen.

Dieses Umgießen erfolgt auf der einen Seite des Käfigläufers 9 mit einem direkten Druckgussverfahren, wie dies später noch näher ausgeführt wird, und über einen Gießkanal 11, der den auf der anderen Stirnseite 46 des Käfigläufers 9 vorhandenen Kurzschlussring 10 bildet.

Der Kupferstab 12 wird durch ein oder mehrmaliges radiales Verstemmen entlang der Nut, der Nutform bzw. dem Nutraum 33 weiter angepasst. Damit werden bessere Anlageflächen zwischen Leiterstab 12, insbesondere aus Kupfer und der Wand 36 des Nutraumes 33 gebildet, die eine mechanische Fixierung des Stabes in der Nut verbessern. Dies ist bei hohen Drehzahlen einer dynamoelektrischen Maschine 1 vorteilhaft. Ebenso wird ein vergleichsweise besserer Wärmeübergang vom Kupferstab 12 zum Blechpaket 32 geschaffen. Damit wird die Kühlung des Käfigläufers 9 und damit das gesamte Betriebsverhalten der dynamoelektrischen Maschine 1 verbessert.

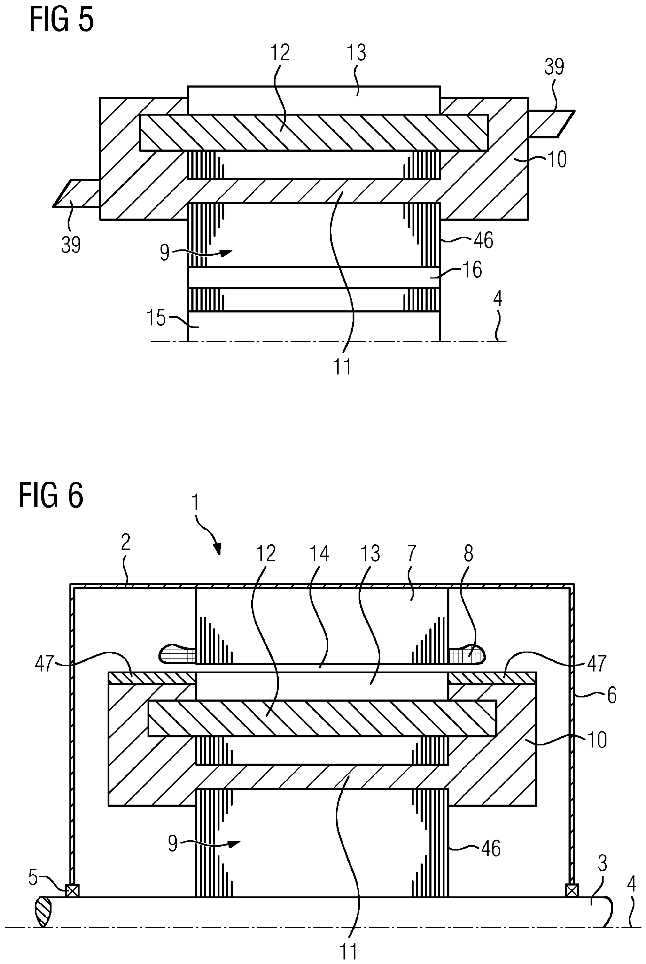

FIG 5 zeigt eine prinzipiell gleiche Ausführung wie FIG 4, nur mit zusätzlichen Kühlkanälen 16, die im Vergleich zu den Gießkanälen 11 radial näher an der Achse 4 angeordnet sind.

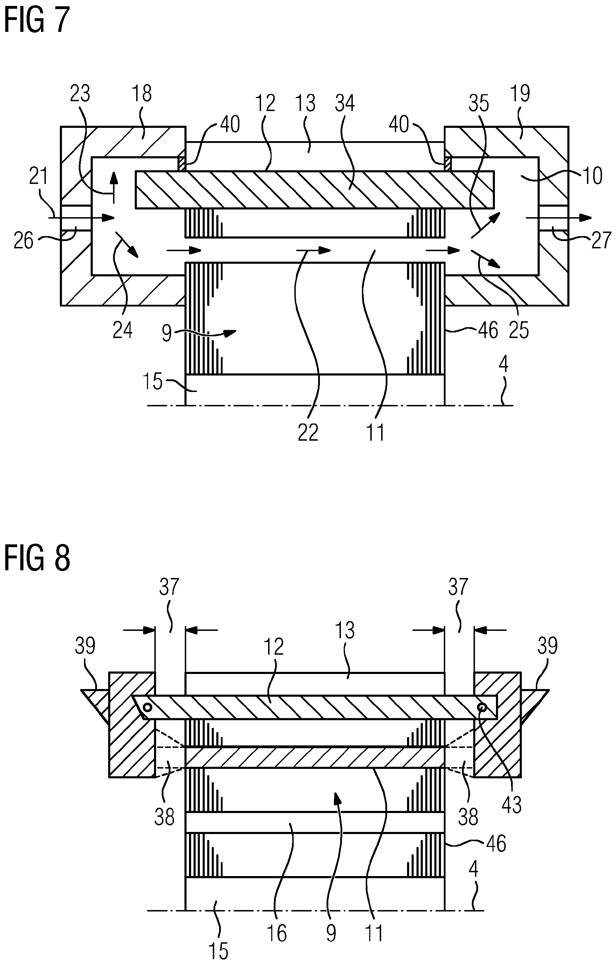

FIG 6 zeigt in prinzipieller Darstellung eine gesamte dynamoelektrische Maschine 1 mit einem Stator 7 und einem Wicklungssystem, das Wickelköpfe 8 an den Stirnseiten des Stators 7 ausbildet. Der Stator 7 ist in einem Gehäuse 2 angeordnet, das sich über Lagerschilde 6 bzw. der dort positionierten Lager 5 auf der Welle 3 abstützt. Der Käfigläufer 9 ist in diesem Fall gemäß FIG 4 ausgebildet. Er kann aber ebenso gemäß FIG 5 oder FIG 8 ausgebildet sein.

Um für noch höhere Drehzahlen geeignet zu sein, kann am radial äußeren Rand des Kurzschlussringe 10 zumindest auf einem axialen Abschnitt ein fliehkraftaufnehmendes Element, wie z.B. eine Manschette 47 vorgesehen werden. Dieses fliehkraftaufnehmende Element ragt dabei vorzugsweise radial nicht in den Bereich des Luftspaltes 14, um eine ev. axiale Kühlung durch den Luftspalt 14 nicht zu beeinträchtigen.

Des Weiteren können sich vor allem bei einer Ausbildung des Käfigläufers 9 nach FIG 4, die Kurzschlussringe 10 radial bis auf die Welle 3 erstrecken. Damit ist eine zusätzliche Wärmeabfuhr aus dem Kurzschlussring 10 in/über die Welle 3 möglich. Dies ist insbesondere dann vorteilhaft, falls die Welle 3 selbst, beispielweise über eine nicht näher dargestellte Lanzenkühlung gekühlt wird.

FIG 7 zeigt beispielhaft ein Herstellverfahren, wobei über ein Werkzeug 18 das zweite elektrisch leitende Material 35 in flüssiger Form, wie z.B. Aluminium an einer Stirnseite des Käfigläufers 9 über eine Eintrittsöffnung 26 des Werkzeugs 18 eingegeben, dort einen Kurzschlussring 10 bildet und über den Gießkanal 11 auf der anderen Stirnseite 46 über das Werkzeug 19 den zweiten Kurzschlussring 10 ausbildet. Über Entlüftungsöffnungen 27 wird dabei zusätzlich Luft aus den Werkzeugen 18, 19 während des Gießvorganges abgegeben. Die Fließrichtungen des zweiten elektrisch leitenden Materials 35, wie Aluminium sind dabei durch die Pfeile 21 bis 25 beispielhaft dargestellt.

Ein anderes nicht erfindungsgemäßes Herstellungsverfahren sieht lediglich an den Stirnseiten 46 des Käfigläufers 9 die Werkzeuge 18, 19 vor. Es wird jeweils über die Öffnungen 26, 27 das zweite elektrisch leitende Material 35 (Aluminium) für die jeweiligen Kurzschlussringe 10 zeitgleich oder hintereinander eingegossen. Es sind keine Gießkanäle 11 notwendig.

Ein anderes nicht erfindungsgemäßes Herstellungsverfahren sieht lediglich an einer Stirnseite des Käfigläufers 9 ein Werkzeug 18 vor. Es wird somit zuerst ein Kurzschlussring 10 auf der einen Stirnseite 46 angegossen, danach durch Drehung des Käfigläufers 9 der zweite Kurzschlussring 10 an der zweiten Stirnseite 46.

Entscheidend bei den Gießvorgängen ist, dass die Werkzeuge 18, 19 den axial verlaufenden Nutschlitz 13, vor allem an den Stirnseiten 46 bei Übergang in den Bereich des zu gießenden Kurzschlussrings 10 ein Absperrelement 40 vorsehen, um abzudichten und den Nutschlitz 13 frei zu halten.

FIG 8 zeigt einen Käfigläufer 9, mit Kurzschlussringen 10, die von den Stirnseiten 46 des Blechpakets eine Abstand 37 aufweisen. Dies dient u.a. der verbesserten Kühlung, insbesondere der Kurzschlussringe 10. Sofern die Kurzschlussringe 10 über einen Gießkanal 11 gegossen wurden, ergeben sich zwischen der Stirnseite des Blechpakets und dem Kurzschlussring 10 axiale Gussabschnitte 38, die zumindest während des Herstellprozesses der Kurzschlussringe 10 durch geeignet Vorrichtungen zu überbrücken sind, damit das Gussmaterial, insbesondere flüssiges Aluminium von der einen Seite auf die andere Seite gelangen kann. Die axialen Gussabschnitt 38 sind bzgl. ihrer Formgebung an die Formgebung der Gießkanäle 11 angepasst.

Die axialen Gussabschnitt 38 können aber ebenso, wie zeichnerisch angedeutet, axial nach außen trichterförmig ausgebildet sein, um den Gießprozess zu vereinfachen, indem Strömungswiderstände während des Druckgießprozesses minimiert werden.

Ebenso können diese Gussabschnitte 38, sofern sie zumindest zum Teil am Käfigläufer 9 verbleiben, zur aktiven Kühlung in diesem Abstand 37 zwischen Stirnseite 46 und Innenseite des Kurzschlussrings 10 beitragen. Vorteilhafterweise werden dabei diese Gussabschnitte 38 lüfterflügelähnlich ausgeformt, ohne den Gussprozess während der Herstellung zu beeinträchtigen.

Diese Gussabschnitte 38 können nach dem Herstellungsprozess am Käfigläufer 9 verbleiben, wobei dadurch der Abstand 37 zwischen Stirnseite 46 und Innenseite des Kurzschlussrings 10 überbrückt ist.

Damit stehen die Käfigläufer 9, die Gießkanäle 11 und ggf. weiterhin Gussabschnitte 38 aufweisen, ebenso wie die Leiter in den Nuten 33 mit den Kurzschlussringen 10 in elektrisch leitender Verbindung.

Des Weiteren zeigt FIG 8 beispielhaft Endabschnitte der Leiterstäbe 12, die mit Loch 43 und mit Loch 43 und Schrägung 44 ausgebildet sind, um die elektrischen Kontaktflächen zwischen Kurzschlussring 10 und Leiterstab 12 und/oder die mechanische Stabilität zwischen Kurzschlussring 10 und Leiterstab 12 zu vergrößern.

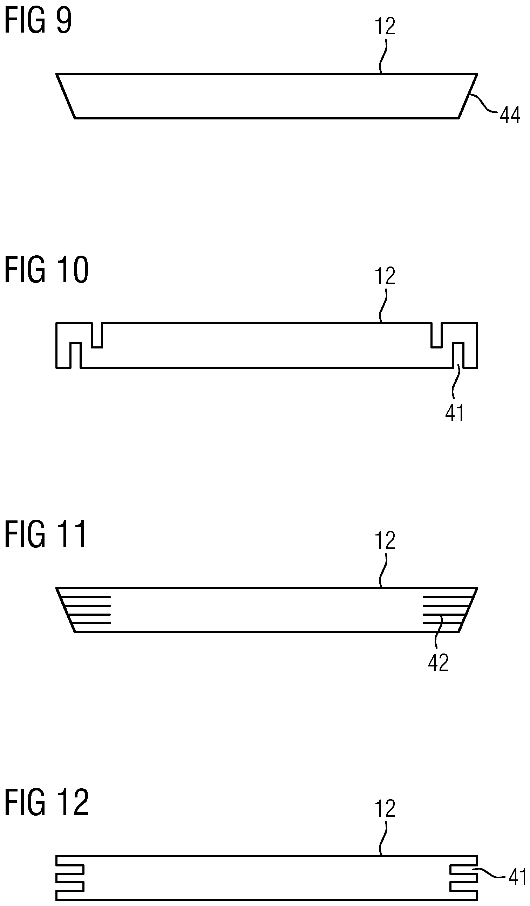

FIG 9 bis FIG 12 zeigen weitere mögliche Ausführungen der Leiterstäbe 12, mit unterschiedlichsten Varianten, die auch an einem Leiterstab oder an Leiterstäben 12 eines Käfigläufers vorgesehen werden, um die elektrischen Kontaktflächen zwischen Kurzschlussring 10 und Leiterstab 12 und/oder die mechanische Stabilität zwischen Kurzschlussring 10 und Leiterstab 12 zu vergrößern.

Dies sind beispielsweise Einschnitte 41, Rändelungen 42 oder Schrägungen 44 an den Endabschnitten der Leiterstäbe 12, die in dem Kurzschlussring 10 positioniert sind.

Derartige Käfigläufer 9, werden bei Asynchronmaschinen 1 für Nieder- und Hochspannung eingesetzt. Die Anwendungen erstrecken sich dabei von industriellen Antrieben, beispielsweise in der Nahrungs- und Genussmittelindustrie, zu Traktionsantrieben beispielsweise von Schienenfahrzeugen, Trucks, insbesondere Miningtrucks, und zu Pumpen, Lüftern und Kompressoren. Ebenso lassen sich derartige Asynchronmaschinen bei Werkzeugmaschinen einsetzen.

Der erfindungsgemäße Gedanke kann selbstverständlich auch für Linearantriebe beispielsweise in den oben aufgeführten Anwendungen umgesetzt werden.

## Patentansprüche

1. Käfigläufer (9) einer dynamoelektrischen Maschine (1) mit
- einem magnetisch leitfähigen Grundkörper, insbesondere einem Blechpaket (32), der sich von einem axialen Ende zu einem zweiten axialen Ende entlang einer Achse (4) erstreckt, mit im wesentlich axial verlaufenden ersten Ausnehmungen (28), die als Nuten ausgebildet sind und sich am radial äußeren Rand der Mantelfläche des magnetisch leitfähigen Grundkörpers befinden und die nur ein erstes Leitermaterial (34) aufweisen,
- einem Kurzschlussring (10), jeweils an den axialen Enden des magnetisch leitfähigen Grundkörpers, der zumindest ein zweites elektrisch leitfähiges Material (35) aufweist und der jeweils die Achse (4) umgibt, wobei das erste elektrisch leitfähige Material (34) der Nuten an den axialen Enden mit dem zweiten elektrisch leitfähigen Material (35) elektrisch kontaktiert ist, **dadurch gekennzeichnet, dass**
- das erste Leitermaterial (34) in den ersten Ausnehmungen (28), die als Nuten (33) ausgebildet sind, und mit einem radial nach außen weisenden Nutschlitz (13) versehen sind, vorgefertigtes Stangenmaterial, insbesondere Kupferstäbe sind,
- die Leiterstäbe (12) in den jeweiligen Nuten (33) durch einen Verstemmvorgang in diesen Nuten (33) nahezu vollflächig mit den Wänden (36) dieser Nuten (33) kontaktiert werden, insbesondere einen Formschluss eingehen,
- zweite Ausnehmungen (29) im magnetisch leitfähigen Grundkörper vorgesehen sind, die mit einem Füllmaterial versehen sind, das das zweite elektrisch leitfähige Material (35) der Kurzschlussringe (10) bildet.

2. Käfigläufer (9) nach Anspruch 1, **dadurch gekennzeichnet, dass** dritte Ausnehmungen (30) im magnetisch leitfähigen Grundkörper vorgesehen sind, die sich radial innerhalb der ersten Ausnehmungen (28) und radial innerhalb der zweiten Ausnehmungen (29) befinden oder radial innerhalb der ersten Ausnehmungen (28) und im Wesentlichen auf radialer Höhe der zweiten Ausnehmungen (29).

3. Käfigläufer (9) nach einem der vorhergehenden Ansprüche, **dadurch gekennzeichnet , dass** die zweite, dritte und eine vierte Ausnehmung (29,30,31) in Umfangsrichtung betrachtet geschlossen ausgeführt sind.

4. Verfahren zur Herstellung eines Käfigläufers (9) einer dynamoelektrischen Maschine (1) mit
- einem magnetisch leitfähigen Grundkörper, insbesondere einem Blechpaket (32), der sich von einem axialen Ende zu einem zweiten axialen Ende entlang einer Achse (4) erstreckt, mit im wesentlich axial verlaufenden ersten Ausnehmungen (28), die als Nuten (33) ausgebildet sind und sich am radial äußeren Rand der Mantelfläche des magnetisch leitfähigen Grundkörpers befinden und die nur ein erstes Leitermaterial (34) aufweisen,
- einem Kurzschlussring (10), jeweils an den axialen Enden des magnetisch leitfähigen Grundkörpers, der zumindest ein zweites elektrisch leitfähiges Material (35) aufweist und der jeweils die Achse (4) umgibt, wobei das erste elektrisch leitfähige Material (34) der Nuten (33) an den axialen Enden mit dem zweiten elektrisch leitfähigen Material (35) elektrisch kontaktiert ist,
durch folgende Schritte:
- Bereitstellen eines magnetisch leitfähigen Grundkörpers, insbesondere eines paketierten Blechpakets (32) mit einer vorgebbaren Anzahl von zumindest drei Ausnehmungen,
- axiales Einsetzen vorgefertigter Leiterstäbe (12) aus einem ersten elektrisch leitfähigen Material (34), insbesondere Kupferstäbe in die ersten Ausnehmungen (28) des magnetisch leitfähigen Grundkörpers, die als Nuten (33) ausgeführt sind, und mit einem radial nach außen weisenden Nutschlitz(13) versehen sind, derart, dass an den axialen Enden des magnetisch leitfähigen Grundkörpers die Leiterstäbe (12) aus den ersten Ausnehmungen (28) ragen,
- Verstemmen der Leiterstäbe (12) in den Nuten (33),
- Einsetzen des mit diesem ersten Material (34) versehenen magnetisch leitfähigen Grundkörpers in eine Gießvorrichtung, derart dass ein erstes Werkzeug (18) und ein zweites Werkzeug (19) die jeweiligen axialen Enden zumindest abschnittsweise dicht umschließen,
- Gießen eines Füllmaterials, insbesondere eines zweiten elektrisch leitfähigen Materials (35) über ein Werkzeug (18,19) in den Bereich eines Kurzschlussrings (10) und/oder in zweite Ausnehmungen (29) des magnetisch leitfähigen Grundkörpers, die als Gießkanal (11) ausgeführt sind und in den Bereich den anderen Kurzschlussringes (10).

5. Verfahren zur Herstellung nach Anspruch 4, **dadurch gekennzeichnet, dass** zumindest die Abschnitte der Leiterstäbe (12), die aus dem magnetisch leitfähigen Grundkörper ragen, bereits beschichtet sind oder beschichtet werden, um eine mischkristalline Verbindung zwischen dem ersten Material, also der Leiter und dem zweiten Material also des Kurzschlussrings (10) herzustellen.

6. Verfahren zur Herstellung nach Anspruch 4 oder 5, **dadurch gekennzeichnet, dass** der magnetisch leitfähige Grundkörper auf einer Welle (3) drehfest verbunden wird.

7. Dynamoelektrische Maschine (1) mit einem Käfigläufer (9) nach einem der Ansprüche 1 bis 3, hergestellt durch ein Verfahren nach einem der Ansprüche 4 bis 6.

8. Verwendung zumindest einer dynamoelektrischen Maschine (1) gemäß Anspruch 7 unter anderem bei Pumpen, Kompressoren, Fahrzeugantrieben und Werkzeugmaschinen.

## Claims

1. Cage rotor (9) of a dynamoelectric machine (1) with
- a magnetically conductive base body, in particular a laminated core (32), which extends along an axis (4) from one axial end to a second axial end, with first recesses (28) which run substantially axially, are embodied as slots and are located at the radially outer edge of the lateral surface of the magnetically conductive base body and which only have a first conductor material (34),
- a short-circuit ring (10), on the axial ends of the magnetically conductive base body in each case, which has at least a second electrically conductive material (35) and which surrounds the axis (4) in each case, wherein the first electrically conductive material (34) of the slots is in electrical contact with the second electrically conductive material (35) at the axial ends,
**characterised in that**
- the first conductor material (34) in the first recesses (28), which are embodied as slots (33) and are provided with a slot opening (13) that points radially outwards, is a prefabricated rod material, in particular copper rods,
- the conductor rods (12) in the respective slots (33), due to a caulking procedure in said slots (33), are in contact with the walls (36) of said slots (33) virtually over the entire area, in particular making a positive fit,
- second recesses (29) in the magnetically conductive base body are provided, which are provided with a filler material that forms the second electrically conductive material (35) of the short-circuit rings (10).

2. Cage rotor (9) according to claim 1,
**characterised in that** third recesses (30) in the magnetically conductive base body are provided, which are located radially within the first recesses (28) and radially within the second recesses (29) or radially within the first recesses (28) and substantially at the radial height of the second recesses (29).

3. Cage rotor (9) according to one of the preceding claims,
**characterised in that** the second, third and a fourth recess (29,30,31) are designed as closed when viewed in the circumferential direction.

4. Method for production of a cage rotor (9) of a dynamoelectric machine (1) with
- a magnetically conductive base body, in particular a laminated core (32), which extends along an axis (4) from one axial end to a second axial end, with first recesses (28) which run substantially axially, are embodied as slots (33) and are located at the radially outer edge of the lateral surface of the magnetically conductive base body and which only have a first conductor material (34),
- a short-circuit ring (10), on the axial ends of the magnetically conductive base body in each case, which has at least a second electrically conductive material (35) and which surrounds the axis (4) in each case, wherein the first electrically conductive material (34) of the slots (33) is in electrical contact with the second electrically conductive material (35) at the axial ends,
by way of the following steps:
- providing a magnetically conductive base body, in particular a bundled laminated core (32), with a predefinable number of at least three recesses,
- axially inserting prefabricated conductor rods (12) made of a first electrically conductive material (34), in particular copper rods, into the first recesses (28) of the magnetically conductive base body, which are designed as slots (33) and are provided with a slot opening (13) that points radially outwards, in such a manner that the conductor rods (12) protrude from the first recesses (28) at the axial ends of the magnetically conductive base body,
- caulking the conductor rods (12) in the slots (33),
- inserting the magnetically conductive base body provided with said first material (34) into a casting apparatus, in such a manner that a first tool (18) and a second tool (19) encapsulate the respective axial ends in a sealing manner, at least in sections,
- casting a filler material, in particular a second electrically conductive material (35), via a tool (18,19), into the region of a short-circuit ring (10) and/or into second recesses (29) of the magnetically conductive base body, which are designed as a casting channel (11), and in the region of the other short-circuit ring (10).

5. Method for production according to claim 4,
**characterised in that** at least the sections of the conductor rods (12) that protrude from the magnetically conductive base body are already coated or are coated in order to produce a mixed crystalline connection between the first material, i.e. the conductor, and the second material, i.e. the short-circuit ring (10).

6. Method for production according to claim 4 or 5,
**characterised in that** the magnetically conductive base body is connected on a shaft (3) in a rotationally fixed manner.

7. Dynamoelectric machine (1) with a cage rotor (9) according to one of claims 1 to 3, produced by way of a method according to one of claims 4 to 6.

8. Use of at least one dynamoelectric machine (1) according to claim 7 inter alia in pumps, compressors, vehicle drives and machine tools.

## Revendications

1. Rotor (9) à cage d'écureuil d'une machine (1) dynamoélectrique comprenant :
- un corps de base conducteur magnétiquement, notamment un paquet (32) de tôles, qui s'étend d'une extrémité axiale à une seconde extrémité axiale le long d'un axe (4), ayant de premiers évidements (28) qui s'étendent sensiblement axialement, qui sont constitués sous la forme d'encoches, qui se trouvent sur le bord extérieur radialement de la surface d'enveloppe du corps de base conducteur magnétiquement et qui ont seulement un premier matériau (34) conducteur,
- un anneau (10) de court circuit, respectivement aux extrémités axiales du corps de base conducteur magnétiquement, qui a au moins un deuxième matériau (35) conducteur électriquement et qui entoure respectivement l'axe (4), le premier matériau (34) conducteur électriquement des encoches étant aux extrémités axiales en contact électriquement avec le deuxième matériau (35) conducteur électriquement,
- **caractérisé en ce que** le premier matériau (34) conducteur dans les premiers évidements (28), qui sont constitués sous forme d'encoches (33) et qui sont pourvus d'une fente (13) d'encoche tournée vers l'extérieur radialement, sont du matériau en barre préfabriqué, notamment des barreaux de cuivre,
- les barreaux (12) conducteurs dans les encoches (33) respectives sont, par une opération de matage, dans ces encoches (33) en contact presque sur toute la surface avec les parois (36) de ces encoches (33), en entrant notamment en une complémentarité de forme,
- il est prévu des deuxièmes évidements (29) dans le corps de base conducteur magnétiquement, qui sont pourvus d'un matériau de charge, qui forme le deuxième matériau (35) conducteur électriquement des anneaux (10) de court-circuit.

2. Rotor (9) à cage d'écureuil suivant la revendication 1, **caractérisé en ce qu'**il est prévu des troisièmes évidements (30) dans le corps de base conducteur magnétiquement, qui se trouvent à l'intérieur radialement des premiers évidements (28) et à l'intérieur radialement des deuxièmes évidements (29) ou à l'intérieur radialement des premiers évidements (28) et sensiblement au niveau radial des deuxièmes évidements (29) .

3. Rotor (9) à cage d'écureuil suivant l'une des revendications précédentes, **caractérisé en ce que** les deuxième, troisième et quatrième évidements (29, 30, 31) sont réalisés fermés considérés dans la direction du pourtour.

4. Procédé de fabrication d'un rotor (9) à cage d'écureuil d'une machine (1) dynamoélectrique, comprenant
- un corps de base conducteur magnétiquement, notamment un paquet (32) de tôles, qui s'étend d'une extrémité axiale à une seconde extrémité axiale le long d'un axe (4), ayant de premiers évidements (28) qui s'étendent sensiblement axialement, qui sont constitués sous la forme d'encoches, qui se trouvent sur le bord extérieur radialement de la surface d'enveloppe du corps de base conducteur magnétiquement et qui ont seulement un premier matériau (34) conducteur,
- un anneau (10) de court-circuit, respectivement aux extrémités axiales du corps de base conducteur magnétiquement, qui a au moins un deuxième matériau (35) conducteur électriquement et qui entoure respectivement l'axe (4), le premier matériau (34) conducteur électriquement des encoches étant aux extrémités axiales en contact électriquement avec le deuxième matériau (35) conducteur électriquement,
par les stades suivants :
- on se procure un corps de base conducteur magnétiquement, notamment un paquet (32) de tôles en paquet ayant un nombre pouvant être donné à l'avance d'au moins trois évidements,
- on insère axialement des barreaux (12) conducteurs préfabriqués en un premier matériau (34) conducteur électriquement, notamment des barreaux de cuivre, dans les premiers évidements (28) du corps de base conducteur magnétiquement, qui sont réalisés sous la forme d'encoches (33) et qui sont pourvues d'une forme (13) d'encoche tournée vers l'extérieur radialement de manière à ce qu'aux extrémités axiales du corps de base conducteur magnétiquement les barreaux (12) conducteurs fassent saillie des premiers évidements (28),
- on effectue un matage des barreaux (12) conducteurs dans les encoches (33),
- on insère le corps de base conducteur magnétiquement pourvu de ce premier matériau (34) dans une installation de coulée, de manière à ce qu'un premier outil (18) et un deuxième outil (19) entourent d'une manière étanche, au moins par endroit, les extrémités axiales respectives,
- on coule un matériau de charge, notamment un deuxième matériau (35) conducteur de l'électricité, par un outil (18, 19) dans la région d'un anneau (10) de court-circuit et/ou dans des deuxièmes évidements (29) du corps de base conducteur magnétiquement, qui sont réalisés sous la forme de canal (11) de coulée, et dans la région de l'autre anneau (10) de court-circuit.

5. Procédé de fabrication suivant la revendication 4, **caractérisé en ce qu'**au moins les tronçons des barreaux (12) conducteurs, qui dépassent du corps de base conducteur magnétiquement, sont déjà revêtus ou on les revêt, pour produire une liaison cristalline mixte entre le premier matériau, donc le conducteur, et le deuxième matériau, donc l'anneau (10) de court-circuit.

6. Procédé suivant la revendication 4 ou 5, **caractérisé en ce que** le corps de base conducteur magnétiquement est solidaire en rotation d'un arbre (3).

7. Machine (1) dynamoélectrique ayant un rotor (9) à cage d'écureuil suivant l'une des revendications 1 à 3, fabriquée par un procédé suivant l'une des revendications 4 à 6.

8. Utilisation d'au moins une machine (1) dynamoélectrique suivant la revendication 7, entre autre dans des pompes, des compresseurs, des entraînements de véhicule et des machines-outils.
